Europäisches Patentamt

European Patent Office

Office européen des brevets

(11) Publication number: **0 401 665 B1**

(12) EUROPEAN PATENT SPECIFICATION

(45) Date of publication of patent specification: **19.01.94**  (51) Int. Cl.⁵: **A01N 65/00**, C05F 11/00

(21) Application number: **90110257.4**

(22) Date of filing: **30.05.90**

The file contains technical information submitted
after the application was filed and not included in
this specification

(54) **Method for growth regulation.**

(30) Priority: **05.06.89 FI 892748**

(43) Date of publication of application:
**12.12.90 Bulletin  90/50**

(45) Publication of the grant of the patent:
**19.01.94 Bulletin  94/03**

(84) Designated Contracting States:
**AT BE DE DK ES FR GB GR IT NL SE**

(56) References cited:
**DE-A- 3 040 040**
**DE-A- 3 336 249**
**GB-A- 2 173 782**

(73) Proprietor: **RAUMA-REPOLA OY**
**Porin Tehtaat**
**PL 96**
**SF-28101 Pori(FI)**

(72) Inventor: **Erjala, Matti**

**SF-25610 Ylönkylä(FI)**
Inventor: **Iivonen, Leena**
**Kankurinkatu 2 A 11**
**SF-00150 Helsinki(FI)**
Inventor: **Laakso, Juhani**
**Rajasillantie**
**SF-28450 Vanha-Ulvila(FI)**

(74) Representative: **Liedl, Gerhard, Dipl.-Phys.**
**Patentanwalt**
**Herterichstrasse 18**
**D-81479 München (DE)**

**Description**

FIELD OF TECHNOLOGY

The invention concerns a method for growth regulation, the product used therein and the manufacturing method of the product. The function of the method is to improve the growth or quality of the root of a plant. The method is suitable f.ex. for the cultivation of root plants like beet crops.

BACKGROUND OF THE INVENTION

Essential for the cultivation of root plants, especially for that of sugar-beet crops is a steady and rapid emergence of seedlings, a rapid growth of leaves before the warm and sunny period of the midsummer and the abundance of assimilation products stored in the root. These are all factors, the improvement of which helps to increase the crop of the plant. Besides, the longer the period of growth required by the root plant is, the more important is their meaning.

Under natural circumstances f.ex. the sugar-beet rises rather slowly. Often the emergence of seedlings is also hindered by environmental factors, like crust formation of the surface of the ground. Often also the early growth of the sugar-beet leaves is slow. On the other hand, the growth of the sugar-beet leaves continues even too long, whereupon the leaves get unnecessary lush, decreasing the proportion of the root crop and delaying the ripening. Although the growth of the sugar-beet can be influenced f.ex. by the cultivation technique to certain extent, there is always room for improvement with the final result, anyway. Thus, the cultivation of the sugar-beet especially needs a growth regulator that speeds up the early phase growth of plants, restricts growth of leaves and makes the ripening earlier and improves the quality of root crop.

On the other hand, it is known that the germination, emergence of seedlings and growth of the leaves and the root of plants are regulated by the own growth substances of the plant, mainly by plant hormones, effected by the genotype of the plant and the environmental factors. Thus attempts have been made for a long time to develop chemical growth regulators for the sugar-beet, that would enable to affect the own growth substances of the plant in order to improve the above mentioned factors of crop, whereupon the ultimate objective, in addition to the increasing of root crop, has also been the quality improvement of the same.

Often these kind of growth regulators are plant hormones or their antibodies. F.ex. there has been an effort to regulate the growth of leaves of the sugar-beet with gibberellinium acids. The gibberellinium acid is a plant hormone with influence on the growth of plant cells. Also the antibodies of the gibberellinium acids, like chlormequat and mepiquatchloride have been used. Also an effort has been made to affect the auxin, another hormone increasing the growth of plant cells, by using f.ex. daminozide. Also other chemicals with hormonal influence are known, like f.ex. the ethephon that turns to ethylene in the plant. Ethylene is a plant hormone increasing the tuber crop f.ex. of the potato.

To some extent hoped-for results have been achieved with above mentioned chemical growth regulators, but with regard to their all effects they haven't been satisfying. Under favourable circumstances good results can be achieved sometimes, but often their positive influence remains insignificant. For that reason no growth regulator has been established in general use for cultivation of the sugar-beet.

Known substances used for the growth regulation are expensive, too, and they are inconvenient in use. Mostly they are sprayed on the leaves of the plants, so that the operator has to be protected. Also injurious remnants can be left into the plant and ground. Use of substances to be sprayed is difficult also with regard to weather conditions, as it requires a certain rainless period and the spaying has to be performed at a certain moment. Influence of the spray on the plant lasts only a part of the growing season and the exact dosage is important.

Effects of the above mentioned chemical growth regulators in cultivation of the sugar-beet is described f.ex. in the following article: Green, C. F., Vaidyanathan, L. V. & Ivins, J. D., Growth of sugar-beet crops including the influence of synthetic plant growth regulators, J. agric. Sci., Camb. (1986), 107, 285-297.

It is known to use composted tree bark as a soil-improving agent. Usually also fertilizers are used together with the composted bark. For example, DE-A-3040040 and DE-A-3336249 describe such soil-improving and fertilizing compositions.

It is object of the present invention to increase the growth of the root of root plants.

## GENERAL CHARACTERISTICS OF THE INVENTION

What is now invented is that uncomposted bark, especially the coniferous bark is usable for growth regulation of plants in order to increase the growth of the root.

The invention and some of its favourable applications have been described in detail in claims.

Except for the increase of the root crop, the bark also improves the quality of the root crop, especially in case of the sugar-beet. The bark speeds up germination of seams, increases the growth of leaves at the beginning and limits the final crop of tops. In addition, the bark acts as a soil improvement method. These influences are attainable with relatively small quantities, f.ex. tilled with the soil with dosage of abt. 0.5 - 20 t/hectare, measured in dry substance.

## SPECIAL CHARACTERISTICS OF THE INVENTION

Composted bark has earlier been used for soil improvement of arable land, in order to affect considerably the chemical and physical properties of the soil. Reaching of the goal has required usage of very large quantities of bark, f.ex. 50 - 100 t/hectare, measured in dry substance. Fresh bark is very sour and its nitrogen content is very low. Because of the acidity the composting has been regarded as necessary. In connection with composting the pH-value of the bark increases and also nitrogen is generally added. Anyway, the composting is an expensive and time-consuming method and it is hardly used f.ex. in Finland on a commercial scale.

In horticulture composted bark has also been used as culture medium.

Fresh unground bark has been used as covering material f.ex. in strawberry plantations for control of weeds. Hereby the required amounts have been big, too, because the required thickness of the layer is abt. 5 cm. Accordingly the bark has been used under ornamental shrubs.

A tendency has always been particularly to avoid usage of fresh bark as culture medium, as some substances of the bark, above all the organic acids, have been regarded as harmful for plants, or even poisonous.

Thus the newly made observation that the fresh, uncomposted bark even in small quantities effects like a growth regulator was quite unexpected in itself. In addition the bark makes it possible to have a favourable effect also on other growth factors of different kind.

Bark as growth regulator has many advantages:
- It is a growth regulator with influence on soil, the influence of which lasts for the whole growing season.
- Its growth regulation influence is remarkably more versatile and reliable than that of other growth regulators.
- It is harmless for the user.
- It is easily used, no danger of overdose exists.
- No injurious remnants exist; on the contrary it may have a favourable aftereffect, in case the used quantity is relatively large, f.ex. more than 5 t/hectare (in dry substance).
- It is a pure natural product.
- It is a waste product of the wood processing industry, that can be utilized in this way.
- In addition to the growth regulation influence it also has other effects, like soil improvement and prevention of crust formation.
- It can be connected with a fertilizer.
- Wood ash can be added to it, whereby it also acts as fertilizer with trace elements.
- It is sour without any special additives, whereby it in a calcareous soil releases manganese and other trace elements for the use of the plant.
- It can prevent some plant diseases.

In the method according to the invention the bark can, above all, be the coniferous bark like pine or spruce bark. Specially suitable has proved to be the pine bark (Pinus sylvestris). Also the bark of broad-leaved trees can be used.

The bark to be used has to be uncomposted, preferably as fresh as possible. The freshness can be described in this case with pH-value. pH-value of coniferous bark peeled off newly is abt. 4, rising gradually in the cource of decomposition up to abt. 6. pH-value of fresh leaf tree bark is abt. 4.7. pH-value of the bark used for growth regulation should be less than abt. 5.5, preferably less than abt. 5 and that of the coniferous bark preferably less than abt. 4.5. The bark can also be stored for a while after the peeling. The maximum acceptable time of storage depends decisively on circumstances; it can be f.ex. abt 2 - 6 months. In storing high temperature of long duration and extraction caused by water should be avoided.

3

In order to produce growth regulator the bark has to be ground. After the grinding the product can be shortly heat-treated (abt. 70°C) in order to kill micro-organisms and weed seams. The product can be mixed with additives. If desired, the ground product can be pressed to briquettes.

Above all that kind of additive can be added to the bark mass that is supposed to decrease souring of the soil caused by the bark. The neutralizing substance can be added f.ex. in connection with the heat-treatment. Especially wood ash can be used as neutralizer but also other liming materials, like dolomitic lime can be used. Wood ash is favourable because it is rich in trace elements and it is a cheap vaste product. The ideal regulation of the quantity of the neutralizer, according to the sourness of the soil and the requirements of the root plant in question, is that the total effect of the mixture in soil tends to optimize the pH (generally to neutral). If the soil is sour the increase of pH can in general increase usability of plant nutrients to some extent. The maximum proportion of the neutralizer in contents of dry substances of the whole mixture is abt. 40 %, in general not more than abt. 20 %. In case the wood ash is used the total pH of the mixture is neutral when the contents of ash is abt. 10 - 15 % in dry substance. In alkaline soil it is best to use unneutralized bark, whereupon the pH decreases towards the value of abt. 6 - 7, where the solubility of nutrients is optimal.

Also other nutrients can be mixed with the product, like f.ex. rock phosphate, potassium salts or nitrogen salts. Total amount of additives is in general not more than 50 % of dry substances.

Ash serves in decreasing the sourness and on the other hand as trace fertilizer increasing the positive influence of the bark on the plant. Other nutrients added to the bark act as normal fertilizers. If other main nutrients (NPK) of the plant are added to the bark, dosing of the bark fertilizer is performed partly in accordance with the amount and usability of main fertilizers and partly in accordance with nutrient requirements of the plant. If the bark is used as growth regulator, the most favourable is to use only the bark with a desired amount of ash added.

The products can be tilled with the soil just before the seeding or in connection with the seeding. Thereby the used amount in dry substance is f.ex. abt. 0.5 - 20 t/hectare, preferably abt. 5 - 10 t/hectare. Used in this way the bark additionally effects as soil improvement and prevention of crust formation, the both of which partly turn up even in the following year.

An other way to use the product is to strew it on the seed row. In this case the amount in dry substance is f.ex. abt. 50 - 1500 kg/hectare, preferably abt. 150 - 700 kg/hectare. Used in this way it also prevents the crust formation of the soil. In addition the bark controls plant diseases close to the seedling. This way of using is economically favourable.

Bark can be placed in the soil also together with the fertilizer. In this kind of application it is favourable to use the bark as briquettes. The amount of the bark to be used is in this case f.ex. 25-500 kg/hectare, in dry substance. Bark placed in the soil can, besides the growth regulation influence, also dissolve nutrients from the ground for the plant, prevent plant diseases and store water for the plant. Variation of moisture changes the volume of the bark and the soil gets cultivated and looser. Placing in the soil is a favourable application, too.

The bark can also be placed separately on the row of seams but under the surface of the ground. In addition to the growth regulation influence the bark has in this case the same positive effects as the bark placed in the soil together with the fertilizer. But in this application the bark acts as a very effective method for preventing the crust formation. There the bark is strewn just between the surface of the ground and the seam. Variation of moisture changes the volume of the bark with a result that the crust formation of the surface of the ground will be broken. In that case the amount of the bark to be used is 50 - 300 kg/hectare, preferably abt. 175 kg/hectare. Also in this application it is favourable to use the bark as briquettes. In connection with the seedling the bark can, if desired, be placed only on each seam.

Different applications can also be combined. It is f.ex. possible to place bark in connection with the fertilizing and in addition to strew it on the row.

The product is especially suitable for growth regulation of sugar-beet crops in order to increase the proportion of the root crop. In addition it is possible also to improve the quality of the root crop. When using the bark all factors that have influence on the sugar yield of the sugar-beet are improved; root crop and sugar content increase and impurities in root crop decrease. This is surprising, because the growth regulators known so far in general improve some of the quality factors only. Mostly the influence of the known growth regulations on the final crop remain unimportant. Good results are also gained with other root plants grown from seams, especially if an additional target is a higher sugar content . Suitable seedling root plants are f.ex. other root plants (Beta sp.) like beetroot, carrot, parsnip, turnip, swedish turnip, spring onion and radish.

The method is also suitable for seedlings of other types like onions and potato. The method helps to improve the starch content of the root and tubers.

In addition the method can be used when setting perennial plants in order to get as strong root system for the plant as possible at the early phase. In this case the bark is tilled to the culture medium. The bark stimulates the growth of the root system at the early phase. But gradually the influence of the bark disappears, whereupon the aerial parts of the plant grow better owing to a strong root system. This kind of use is suitable f.ex. for fruit trees and bushes, for other perennial berries like the strawberry, and for ornamental shrubs like roses. When the bark is used in planting of perennial plants the bark product can also include sparingly soluble phosphor and potassium, among other things. The amount to be used in this case would be f.ex. abt. 0.5 - 3 kg/m$^2$ in dry substance.

Some further products and results of field tests of the sugar-beet are reported in the following. The tests were performed by using fresh pine bark from a sawmill, with a pH-value of abt. 4.2. The bark was ground and shorly heated up to a temperature of abt. 70 °C. The used ash was made of the pine bark.

Contents of the products have been calculated in quantities of dry substances.

| Product A | |
|-----------|---|
| Bark | 89.0 % |
| Ash | 11.0 % (pH of the whole mixture abt. 7) |

| Product B | |
|-----------|---|
| Bark | 77.3 % |
| Rock phosphate | 7.7 % (P content of the whole mixture 1%) |
| Ash | 15.0 % |

| Product C | |
|-----------|---|
| Bark | 64.2 % |
| Rock phosphate | 30.8 % (P content of the whole mixture 4%) |
| Ash | 5.0 % |

When using the products B and C potassium and nitrogem were given separately. When using the product A also phosphor was given separately. Also mixtures with the usual ready-made NPK-fertilizer mixed with the bark were tested; f.ex. a mixture with 1/5 of NPK-fertilizer and 4/5 of bark neutralized by ash.

Water content of the products used was abt. 50 % (variation abt. 5 percentage units). Doses mentioned in tests are given in fresh weight of the total product and contents are calculated in dry content.

Test 1

Following test mixtures were used for the sugar-beet:
1. Normal NPK
2. NPK + 10 t/hectare bark neutralized with ash (A; 11 % ash)
3. NK + 5 t/hectare bark fertilizer (B; 1 % P, 15 % ash)
4. NK + 10 t/hectare bark fertilizer (B; 1 % P, 15 % ash)
5. NK + 20 t/hectare bark fertilizer (B; 1 % P, 15 % ash)
6. NK + 5 t/hectare bark fertilizer (C; 4 % P, 5 % ash)
7. NK + 10 t/hectare bark fertilizer (C; 4 % P, 5 % ash)
8. NH + 20 t/hectare bark fertilizer (C; 4 % P, 5 % ash)

The bark product was spreaded over the plough and tilled with soil in connection with the seeding. Results presented by the enclosed table I are mean values of two experiments made by the Finnish research centre for sugar-beet in 1986 and 1988.

Table I:1

|  | 1 | 2 | 3 | 4 | 5 | 6 | 7 | 8 |
|---|---|---|---|---|---|---|---|---|
| Root crop |  |  |  |  |  |  |  |  |
| t/hectare | 42.9 | 46.1 | 44.1 | 44.8 | 46.3 | 43.5 | 45.9 | 49.5 |
| Ratio | 100 | 107 | 103 | 104 | 108 | 101 | 107 | 115 |
|  |  |  |  |  |  |  |  |  |
| Sugar-% | 16.94 | 17.36 | 17.21 | 17.49 | 17.57 | 17.14 | 17.21 | 17.55 |
| Difference | 0.00 | +0.42 | +0.27 | +0.55 | +0.63 | +0.20 | +0.27 | +0.61 |
|  |  |  |  |  |  |  |  |  |
| Sugar crop yield |  |  |  |  |  |  |  |  |
| kg/hectare | 7280 | 8031 | 7615 | 7851 | 8150 | 7482 | 7912 | 8274 |
| Ratio | 100 | 110 | 105 | 108 | 112 | 103 | 109 | 114 |
|  |  |  |  |  |  |  |  |  |
| Chrystallizing sugar |  |  |  |  |  |  |  |  |
| kg/hectare | 5754 | 6445 | 6075 | 6331 | 6589 | 6001 | 6318 | 6707 |
| Ratio | 100 | 112 | 106 | 110 | 115 | 104 | 110 | 117 |
|  |  |  |  |  |  |  |  |  |
| Amino-N |  |  |  |  |  |  |  |  |
| mg/100 g | 20.1 | 17.4 | 20.4 | 17.3 | 16.9 | 19.2 | 19.6 | 17.2 |
| Difference | 0.0 | -2.6 | +0.3 | -2.8 | -3.2 | -0.9 | -0.5 | -2.9 |
|  |  |  |  |  |  |  |  |  |
| Potassium |  |  |  |  |  |  |  |  |
| me/100 g | 7.38 | 7.12 | 7.20 | 7.03 | 7.00 | 7.12 | 7.21 | 6.91 |
| Difference | 0.00 | -0.26 | -0.18 | -0.35 | -0.38 | -0.26 | -0.17 | -0.47 |
|  |  |  |  |  |  |  |  |  |
| Natrium |  |  |  |  |  |  |  |  |
| me/100 g | 0.71 | 0.63 | 0.68 | 0.62 | 0.59 | 0.61 | 0.63 | 0.52 |
| Difference | 0.00 | -0.08 | -0.03 | -0.09 | -0.12 | -0.10 | -0.08 | -0.19 |
|  |  |  |  |  |  |  |  |  |
| Yield % | 78.7 | 80.0 | 79.4 | 80.3 | 80.6 | 79.7 | 79.6 | 80.9 |
| Difference | 0.0 | +1.3 | +0.7 | +1.6 | +1.9 | +1.0 | +0.9 | +2.2 |
|  |  |  |  |  |  |  |  |  |
| Sugar beets 1000 pcs/ |  |  |  |  |  |  |  |  |
| hectare | 84.4 | 97.1 | 90.7 | 90.4 | 94.7 | 85.6 | 95.0 | 99.7 |
| Ratio | 100 | 115 | 107 | 107 | 112 | 101 | 113 | 118 |

These results indicate that the bark increases the root crop, the sugar content of the root crop, the quantity of crystallizing sugar, yield percentage (= crystallizing sugar/sugar crop) and the number of sugar beets per hectare. The results also indicate that the bark decreases impurities, aminonitrogen, potassium and sodium of the sugar beet. The positive influence depends on the amount of the bark fertilizer, but the additives of the bark are of little importance only.

Used in this way the bark also has a small positive after-effect on the sugar beet crop of the following year, which is most apparently indicated by the sugar percentage, like described in the following table I:2.

Table I:2

|  | 1 | 2 | 3 | 4 | 5 | 6 | 7 | 8 |
|---|---|---|---|---|---|---|---|---|
| Sugar-% next year | 16.74 | 16.88 | 16.87 | 16.87 | 17.05 | 16.86 | 16.83 | 17.14 |
| Difference | 0.00 | +0.14 | +0.12 | +0.13 | +0.31 | +0.11 | +0.09 | +0.40 |

Test II

Influence of the bark on the growth of the sugar beet was also examined under controlled greenhouse conditions with pot experiments. The tests were made with product A. Number of plants was the same in every pot. Every pot had the same NPK-fertilizer. The product was tilled with soil. Results are presented by the enclosed table II.

<u>Table II</u>

|  | Amount of the neutralized bark product, g/pot | | | | | |
|---|---|---|---|---|---|---|
|  | 0 | 25 | 50 | 100 | 200 | 400 * |
| **Root crop** | | | | | | |
| g/pot | 136 | 140 | 142 | 165 | 150 | 149 |
| Ratio | 100 | 103 | 104 | 122 | 111 | 110 |
| **Tops crop** | | | | | | |
| g/pot | 168 | 149 | 163 | 157 | 138 | 110 |
| Ratio | 100 | 89 | 97 | 93 | 82 | 65 |
| Sugar-% | 15.35 | 16.29 | 15.95 | 16.46 | 16.42 | 17.29 |
| Difference | 0.0 | +0.94 | +0.60 | +1.11 | +1.07 | +1.94 |
| **Crystallizing** | | | | | | |
| sugar, g | 17.1 | 19.2 | 18.6 | 22.8 | 20.6 | 21.8 |
| Ratio | 100 | 112 | 109 | 133 | 120 | 127 |
| Amino-N, | | | | | | |
| mg/100 g | 41.7 | 39.3 | 37.2 | 36.5 | 30.5 | 20.8 |
| Difference | 0.0 | -2.4 | -4.5 | -5.2 | -11.2 | -20.9 |
| Yield-% | 82.5 | 83.6 | 83.5 | 83.8 | 83.0 | 84.5 |
| Difference | 0.0 | +1.1 | +1.0 | +1.3 | +0.5 | +2.0 |

* Converted into figures of field conditions the corresponding amounts would be 0, 2.5, 5, 10, 20 and 40 t/hectare (in fresh weight).

This example indicates distinctly the growth regulation influence of the bark on the sugar beet:
- Under the influence of the bark the root crop is increased and the tops crop decreased, that is the bark turns the growth of the beet in the desired direction.
- The sugar percentage is increased.
- Amount of injurious impurities (example amino-N) is decreased.
- Due to the increase of the root crop and the sugar percentage and the decrease of impurities the crop of crystallizing sugar and the yield percentage (proportion of the crystallizing sugar of the total sugar crop) are increased.

Pot experiments indicate that the improvement of the root crop does not depend on the increased density of plants.

The optimal result was yielded with a bark product amount of abt. 10 - 20 t/hectare (in fresh weight), corresponding to the results of the field experiment I.

Test III

Corresponding to the test II the influence of the heat-treated bark only (without ash) was examined. (The heat-treatment does not have any significant influence on the results.) The water content of the product was abt. 45 %. Results are presented by table III.

## Table III

|  | Bark amount, g/pot | | | | | |
|---|---|---|---|---|---|---|
|  | 0 | 25 | 50 | 100 | 200 | 400 |
| **Root crop** | | | | | | |
| g/pot | 136 | 154 | 139 | 154 | 136 | 131 |
| Ratio | 100 | 114 | 102 | 113 | 100 | 96 |
| **Tops crop** | | | | | | |
| g/pot | 168 | 168 | 137 | 140 | 126 | 104 |
| Ratio | 100 | 100 | 82 | 84 | 75 | 62 |
| Sugar-% | 15.35 | 15.25 | 16.16 | 15.63 | 16.56 | 16.45 |
| Difference | 0.0 | -0.10 | +0.81 | +0.28 | +1.21 | +1.10 |
| **Crystallizing** | | | | | | |
| sugar, g/pot | 17.1 | 20.0 | 19.0 | 20.1 | 18.9 | 18.2 |
| Ratio | 100 | 117 | 111 | 117 | 111 | 106 |
| **Amino-N** | | | | | | |
| mg/100 g | 41.7 | 34.8 | 36.0 | 36.1 | 29.6 | 26.3 |
| Difference | 0.0 | -6.9 | -5.7 | -5.6 | -12.1 | -15.4 |
| Yield-% | 82.5 | 83.6 | 84.2 | 83.5 | 84.0 | 83.6 |
| Difference | 0.0 | +1.1 | +1.7 | +1.0 | +1.5 | +1.1 |

Thus, a positive effect is also reached with the bark only.

Test IV

Bark product neutralized with ash (product A) was strewn as a cover abt. 7 cm broad over the seed row of the sugar beet. The results are presented by the enclosed table IV.

Table IV

|  | Amount of bark neutralized with ash kg/hectare | | | | |
|---|---|---|---|---|---|
|  | 0 | 350 | 700 | 1400 | 2800 |
| Root crop, t/hectare | 44.8 | 49.1 | 50.5 | 49.7 | 50.3 |
| Ratio | 100 | 109 | 111 | 111 | 112 |
| Sugar-% | 16.45 | 16.61 | 16.74 | 16.60 | 16.71 |
| Difference | +0.00 | +0.16 | +0.29 | +0.16 | +0.26 |
| Sugar crop, kg/hectare | 7346 | 8140 | 8369 | 8252 | 8391 |
| Ratio | 100 | 111 | 114 | 112 | 114 |
| Crystallizing sugar, kg/hectare | 5951 | 6620 | 6837 | 6713 | 6875 |
| Ratio | 100 | 111 | 115 | 113 | 116 |
| Yield-% | 81.0 | 81.3 | 81.7 | 81.3 | 81.9 |
| Difference | 0.0 | +0.3 | +0.6 | +0.3 | +0.9 |
| Sugar beets, 1000 pcs/hectare | 74.7 | 75.0 | 79.9 | 81.0 | 88.8 |
| Ratio | 100 | 100 | 107 | 108 | 119 |

F. ex. the following product D can be used as planting fertilizer as mentioned earlier. Amount to be used is f.ex 0.5 - 3 kg/m² in dry substance.

| Product D | |
|---|---|
| Bark | 60.0 % |
| Rock phosphate | 15.4 % (P content of the whole mixt. 2 %) |
| $K_2SO_4$ | 9.6 % |
| Ash | 15.0 % |

Claims

1. A method for growth regulation to influence the growth of the root of root plants,
   **characterised** in that fresh tree bark with a pH-value of less than 5.5, preferably less than 5 which has been ground is dosed to the culture medium.

2. A method as claimed in claim 1 to increase the growth of the root of root plants like beets.

3. A method as claimed in claim 1 to improve the quality of root crop of root plants like beets.

4. A method as claimed in claim 1 to improve rooting of seedlings to be planted.

5. A method as claimed in any of the claims 1 - 4,
   **characterised** in that the bark is of coniferous trees like pine or spruce bark, preferably pine bark.

6. A method as claimed in claim 5,
   **characterised** in that the pH-value of the bark is less than 4.5, preferably 4.2.

7. A method as claimed in any of the claims 1 - 6,
   **characterised** in that the bark is dosed by strewing it over the seed row, suitably 50 - 1500 kg/hectare, preferably 150 - 700 kg/hectare, calculated in dry substance.

8. A method as claimed in any of the claims 1 - 7,
   **characterised** in that the bark is dosed by placing it beside the seed row, suitably 25 - 500 kg/hectare, calculated in dry substance.

9. A method as claimed in claim 8,
   **characterised** in that the bark is dosed on the seed row but under the surface of the ground, suitably 50 - 300 kg, calculated in dry substance.

10. A method as claimed in any of the claims 1 - 9 ,
    **characterised** in that the bark is dosed by tilling it with soil, suitably 0.5 - 20 t/hectare, preferably 5 - 10 t/hectare, calculated in dry substance

**Patentansprüche**

1. Verfahren zur Wachstumsregulierung, um das Wachstum der Wurzeln von Wurzelpflanzen zu beeinflussen,
   **dadurch gekennzeichnet,**
   daß frische Baumrinde mit einem pH-Wert von weniger als 5,5, vorzugsweise weniger als 5, die gemahlen wurde, zum Nährboden dosiert wird.

2. Verfahren nach Anspruch 1, um das Wachstum der Wurzeln von Wurzelpflanzen wie Beeten zu beschleunigen.

3. Verfahren nach Anspruch 1, um die Qualität der Wurzelausbeute von Wurzelpflanzen wie Beeten zu verbessern.

4. Verfahren nach Anspruch 1, um das Wurzeln von zu pflanzenden Setzlingen zu verbessern.

5. Verfahren nach einem der Ansprüche 1 bis 4,
   **dadurch gekennzeichnet,**
   daß die Rinde von Nadelbäumen wie Kiefern- oder Fichtenrinde, vorzugsweise Kiefernrinde, ist.

6. Verfahren nach Anspruch 5,
   **dadurch gekennzeichnet,**
   daß der pH-Wert der Rinde weniger als 4,5, vorzugsweise 4,2, beträgt.

**7.** Verfahren nach einem der Ansprüche 1 bis 6,
**dadurch gekennzeichnet,**
daß die Rinde dosiert wird, indem sie über die Samenreihe gestreut wird, geeigneterweise 50 bis 1500 kg/Hektar, vorzugsdaß die Rinde dosiert wird, indem sie über die Samenreihe gestreut wird, geeigneterweise 50 bis 1500 kg/Hektar, vorzugsweise 150 bis 700 kg/Hektar, berechnet in Trockensubstanz.

**8.** Verfahren nach einem der Ansprüche 1 bis 7,
**dadurch gekennzeichnet,**
daß die Rinde dosiert wird, indem sie neben der Samenreihe plaziert wird, geeigneterweise 25 bis 500 kg/Hektar, berechnet in Trockensubstanz.

**9.** Verfahren nach Anspruch 8,
**dadurch gekennzeichnet,**
daß die Rinde auf die Samenreihe, aber unter die Erdoberfläche dosiert wird, geeigneterweise 50 bis 300 kg, berechnet in Trockensubstanz.

**10.** Verfahren nach einem der Ansprüche 1 bis 9,
**dadurch gekennzeichnet,**
daß die Rinde dosiert wird, indem sie mit der Erde eingeackert wird, geeigneterweise 0,5 bis 20 t/Hektar, vorzugsweise 5 bis 10 t/Hektar, berechnet in Trockensubstanz.

**Revendications**

**1.** Procédé de régulation de la croissance pour influencer la croissance de la racine de plantes à racine charnue, **caractérisé** en ce que de l'écorce d'arbre fraîche, ayant une valeur de pH inférieure à 5,5 et de préférence inférieure à 5, qui a été moulue, est administrée au milieu de culture.

**2.** Procédé selon la revendication 1 pour augmenter la croissance de la racine des plantes à racine charnue comme des betteraves.

**3.** Procédé selon la revendication 1 pour améliorer la qualité de la récolte de racine des plantes à racine charnue comme les betteraves.

**4.** Procédé selon la revendication 1 pour améliorer l'enracinement de plants à planter.

**5.** Procédé selon l'une quelconque des revendications 1 à 4, **caractérisé** en ce que l'écorce est celle d'arbres conifères comme le pin ou l'épicéa, de préférence de l'écorce de pin.

**6.** Procédé selon la revendication 5, **caractérisé** en ce que la valeur du pH de l'écorce est inférieure à 4,5, et de préférence 4,2.

**7.** Procédé selon l'une quelconque des revendications 1 à 6, **caractérisé** en ce que l'on administre l'écorce en la répandant sur la rangée de plants, à raison de 50 à 1500 kg/hectare, et de préférence 150 à 700 kg/hectare, calculés pour une substance sèche.

**8.** Procédé selon l'une quelconque des revendications 1 à 7, **caractérisé** en ce que l'on administre l'écorce en la plaçant à côté de la rangée de plants, à raison de 25 à 500 kg/hectare calculés sur une substance sèche.

**9.** Procédé selon la revendication 8, **caractérisé** en ce que l'on administre l'écorce sur la rangée de plants mais en dessous de la surface du sol, à raison de 50 à 300 kg/hectare, calculés sur une substance sèche.

**10.** Procédé selon l'une quelconque des revendications 1 à 9, **caractérisé** en ce que l'on administre l'écorce en la labourant avec le sol, à raison de 0,5 à 20 t/hectare, et de préférence 5 à 10 t/hectare, calculés sur une substance sèche.